# EUROPÄISCHE PATENTANMELDUNG

(11) **EP 2 430 952 A1**
(43) Veröffentlichungstag der Anmeldung: **21.03.2012**
(21) Anmeldenummer: 11175074.1
(22) Anmeldetag: 22.07.2011
(51) Int. Cl.: A47J 31/02, A47J 31/06

(54) **Ringförmiger Adapter mit Netz zum Aufbrühen von Tee in Standardpappbechern**

(30) Priorität: 30.07.2010 DE 202010010872 U; 18.12.2010 DE 102010055096
(71) Anmelder: Ho, Gladys, 60529 Frankfurt (DE)
(72) Erfinder: Sauerwein, Kai, 60529 Frankfurt (DE)
(74) Vertreter: Schmidt, Steffen

(57) **Zusammenfassung**

Die Erfindung betrifft einen ringförmigen Adapter mit anhängendem geschlossenem Netz, wobei er gleichzeitig dazu geeignet ist, einerseits standardisierte Pappbecherdeckel aufzunehmen, und andererseits auf standardisierten Pappbechern aufgebracht zu werden.

## Beschreibung

Die Abgabe von Tee zur Mitnahme erfolgt in der Systemgastronomie in der Regel in standardisierten Pappbechern.

Der Tee wird dabei zumeist in Teebeuteln in einen Pappbecher eingebracht, der zuvor mit heißem Wasser befüllt wurde.

Der im Schutzanspruch zu 1 angegebenen Erfindung liegt das Problem zugrunde, dass die vorgeschilderte Form der Teeabgabe ein eingeschränktes Genussgefühl zur Folge hat und nicht dazu angetan ist, einen hohen Preis für das Produkt zu rechtfertigen.

Dieses Problem wird mit den im Schutzanspruch zu 1 aufgeführten Merkmalen gelöst.

Mit der Erfindung wird erreicht, dass Tee lose in ein Netz gefüllt und teegerecht aufgebrüht werden kann. Das geschieht nicht durch Verwendung neuer Deckel oder neuer Becher.

Vielmehr können die marktüblichen standardisierten Pappbecher sowie die dazugehörigen standardisieren Deckel verwendet werden.

Die Ausgestaltung der Erfindung ist im Schutzanspruch 1 dargestellt.

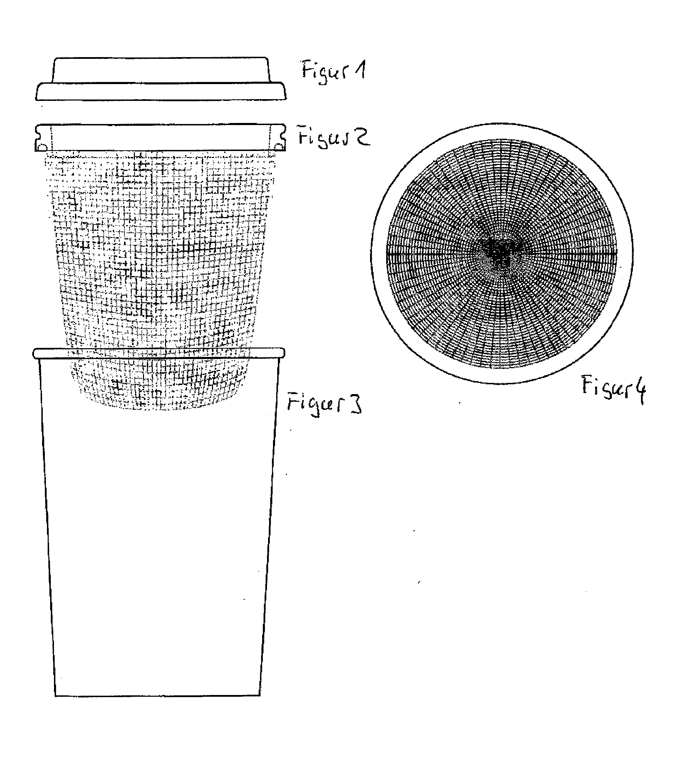

Ein Ausführungsbeispiel der Erfindung wird anhand der Fig. 1 bis Fig. 3 erläutert. Es zeigen:
- Fig. 1: den Standarddeckel
- Fig. 2: den ringförmigen Adapter zur Aufnahme des Deckels und zum Anbringen auf dem Becher
- Fig.: 3 den Standardbecher
- Fig. 4: den ringförmigen Adapter in der Draufsicht.

## Patentansprüche

1. Ringförmiger Adapter mit anhängendem geschlossenem Netz **dadurch gekennzeichnet, dass** er gleichzeitig dazu geeignet ist, einerseits standardisierte Pappbecherdeckel aufzunehmen, und andererseits auf standardisierten Pappbechern aufgebracht zu werden.
